# EUROPEAN PATENT APPLICATION

(11) **EP 3 324 043 A1**
(43) Date of publication of application: **23.05.2018**
(21) Application number: 16199848.9
(22) Date of filing: 21.11.2016
(51) Int. Cl.: F03D 7/02, F03D 13/25, B63B 35/44

(54) **METHOD FOR CONTROLLING A FLOATING OFFSHORE WIND TURBINE, WIND TURBINE CONTROL SYSTEM AND FLOATING OFFSHORE WIND TURBINE**

(71) Applicant: LM WP Patent Holding A/S, 6000 Kolding (DK)
(72) Inventor: Schuring, Roelof, Willem, 7531 HV Enschede (NL)
(74) Representative: Heinrich, Bernd

(57) **Abstract**

The invention relates to a method of controlling a floating offshore wind turbine operated at sea, the floating offshore wind turbine comprising a tower, a rotor with at least one blade and a floating buoyancy structure arranged for supporting the tower. The method comprising the steps of obtaining at least one motion related parameter (MRP) of the at least one blade, said motion related parameter (MRP) depending on condition of sea and wind, determining at least one control signal (CS) on the basis of said at least one motion related parameter (MRP), and controlling the floating offshore wind turbine dependent on the control signal (CS), wherein the motion related parameter (MRP) is obtained as a dynamic state or change of the at least one blade. The invention also relates to a wind turbine control system for controlling a floating offshore wind turbine and a floating offshore wind turbine.

## Description

### FIELD OF THE INVENTION

The invention relates to a method for controlling a floating offshore wind turbine. The invention also relates to a wind turbine control system for controlling a floating offshore wind turbine and a floating offshore wind turbine.

### BACKGROUND OF THE INVENTION

In order to lower the cost for installing offshore wind turbines such wind turbines may be supported on floating support structures or platforms. Traditional offshore wind turbines are supported by seabed foundations, like monopoles, tripods, jackets and gravity foundations, which are firmly fixed to the seabed. The establishment of such seabed foundations is expensive and, therefore, there is an interest in utilizing the cheaper floating support structures for offshore wind turbines. By moving the wind turbine to greater depths, the wind profile becomes stronger and more uniform over the entire rotor plane and the wave and sea current loads on the support structure are further reduced.

Due to the floating support structures the floating offshore wind turbines are influenced by waves, wind and sea currents. Thus, the floating support structure results in loads on the wind turbine which may not occur for traditional offshore wind turbines. Such loads may result in extreme load situations exceeding acceptable load limits or even flipping over the floating wind turbine.

Methods for operating traditional onshore wind turbines are generally not suitable for operating floating offshore wind turbines for the purpose of dealing with loads caused by the floating support structure and the conditions of the sea. Therefore, there is a need for new or improved methods for operating floating offshore wind turbines, for example operating methods capable of dealing with loads caused by waves, wind and sea currents.

### SUMMARY OF THE INVENTION

It is an object of the invention to provide a method for operating a floating offshore wind turbine at sea. Particularly, it is an object of the invention to provide a method controlling floating offshore wind turbines for the purpose of reducing loads working on floating offshore wind turbines caused by the effect of wind, waves and other conditions of the sea on the wind turbine and the floating support structure.

In a first aspect of the invention there is provided a method for controlling a floating offshore wind turbine operated at sea, the floating offshore wind turbine comprising a tower, a rotor with at least one blade and a floating buoyancy structure arranged for supporting the tower, the method comprising the steps of:
- obtaining at least one motion related parameter MRP of the at least one blade, said motion related parameter MRP depending on conditions of sea and wind,
- determining at least one control signal CS on the basis of said at least one motion related parameter MRP, and
- controlling the floating offshore wind turbine dependent on the at least one control signal CS,
wherein the at least one motion related parameter MRP is obtained as a dynamic state or change of the at least one blade.

Advantageously, the motion related parameter MRP may be seen as a parameter which quantifies an effect of the condition of the sea and wind on the least one blade in a way so that the motion related parameter is useable for controlling the floating offshore wind turbine to reduce or counteract extreme loads and possibly also fatigue loads on the wind turbine components, such as the blade.

The motion related parameter MRP is understood as motion related information which may include any measured, estimated or predicted motion related parameter of the at least one blade. The motion related parameter may describe any dynamic state or a dynamic change of the at least one blade in a steady-state condition. Thus, the motion related parameter may not include direct rigid body motion of the blades, i.e. pitch rotation of blades, resulting in a change between steady-state conditions. The motion related parameter of the at least one blade may in a preferred configuration be based on a measured dynamic state or change of the blade.

Advantageously, conditions of sea and wind for determining said at least one motion related parameter are measured in or on the at least one blade. The measured values of the blade indirectly reflect the impact by sea and wind conditions on the floating offshore wind turbine and especially on the blade. Specific wave or wind sensors or detector units for directly measuring or determining the conditions of the sea and wind may hereby not be required or solely be included as additional or secondary sensor values for further confirming the validity of the measured values in or on the at least one blade.

Advantageously, said conditions of sea and wind for obtaining said at least one motion related parameter MRP are measured in or on the at least one blade as strain values and/or stress values and/or motion data from one or more blade motion detectors. The strain values, stress values and/or motion data may be used in any combination to further enhance the accuracy of the MRP signal. Hereby it is possible to provide control signals CS useable for pitch controlling the blade of the floating offshore wind turbine or applying other/additional corrective actions such as breaking the rotor, change the torque of the generator, for reducing or counteracting blade loads and thus reducing the fatigue loads.

Advantageously, said dynamic state or change of the at least one blade is obtained as blade deflection values of the at least one blade e.g. by measurement, estimation and/or prediction of a distance between the at least one blade and the tower. Blade deflection values indirectly reflect the condition of sea and wind and therefore knowledge of the blade deflections is important for controlling the blade pitch correctly e.g. to avoid a risk of tower collision. The possibility of estimating or predicting future deflection values of the at least one blade from currently measured deflection values ensures a fast reacting method of controlling a floating offshore wind turbine in relation to the conditions of sea and wind. The accuracy of the predicted future deflection values may be enhanced by combining the current measured deflection value with previously measured deflection values or other related parameters.

Advantageously, said blade deflection is measured as position data, velocity data, and/or acceleration data of one or more locations of the at least one blade e.g. the location of a tip end of the blade. The velocity data may be derived, e.g. by differential calculation, from the position data, or vice versa. The acceleration data may be derived, e.g. by differential calculation, from the velocity data, or vice versa, e.g. by integral calculation. The acceleration data may further be derived, e.g. by double differential calculation, from the position data, or vice versa, e.g. by double integral calculation. Hereby it is possible to obtain a precise measurement of blade deflection as a function of the conditions of the sea and wind. This measurement provides a very suitable representation of the impact that the conditions of sea and wind have on the at least one blade of the floating offshore wind turbine.

Advantageously, said dynamic state or change of the at least one blade is obtained as oscillation values of the at least one blade e.g. by measurement, estimation and/or prediction of oscillation amplitudes. The oscillation amplitudes may for example, but not limited to, be obtained directly from the abovementioned acceleration data or derived, e.g. by differential calculation, from the abovementioned velocity data. Hereby it is also possible to obtain a precise measurement of blade oscillation as a function of the conditions of the sea and wind. This measurement provides a particularly suitable representation of the impact that the conditions of sea and wind may have on the at least one blade of the floating offshore wind turbine and may advantageously be used in controlling the floating offshore wind turbine based on the measured, estimated and/or predicted oscillation values.

Advantageously, said dynamic state or change of the at least one blade is obtained as fore-aft rotations of the at least one blade e.g. by measurement, estimation and/or prediction of one or more locations of the at least one blade, such as the location of a root end of the blade. A precise measurement of fore-aft rotations of the at least one blade as a function of the conditions of the sea and wind is important in order to avoid a negative damping which would result in growing fore-aft rotations of the floating offshore wind turbine.

The measurement of the fore-aft rotations of the blade root may in an exemplary configuration, be combined with the measurement of the position data, velocity data, acceleration data or even the oscillation data of the blade tip. This allows the measurement at the blade root to be used as a reference signal for the measurement at the blade tip.

Advantageously, the at least one control signal CS is determined by comparing said at least one motion related parameter MRP with a tower clearance threshold, a load threshold of the at least one blade and/or a protective value of the floating offshore wind turbine. Hereby, it is possible to define one or more protective values of the floating offshore wind turbine for ensuring a safe control e.g. by adjusting the pitch control of the at least one blade in relation to the protective values. The load threshold may be determined based on the particular blade length, chord length, blade thickness and/or aerodynamic profile of the blade. The protective value may for example, but not limited to, relate to a maximum oscillation amplitude or frequency, maximum velocity, a maximum deviation from a reference location, or another suitable limit value for a particular measured or monitored parameter. The control signal CS may be determined by simply comparing the measurement with a predetermined threshold or limit value for that parameter.

Advantageously, the conditions of sea and wind are detected by:
- transmitting a signal between a tip communication device located towards a tip end of the at least one blade and a root communication device located towards a root end of the at least one blade,
- calculating a distance between the tip communication device and the root communication device based on the transmitted signal,
- estimating a deflection value of the at least one blade based on the calculated distance.

Hereby it is possible to estimate a deflection value of the at least one blade with a significant accuracy and hereby the deflection value is providing a precise understanding of the sea and wind conditions in their effect on the floating offshore wind turbine.

The estimation of the deflection value based on transmission of a suitable signal between root and tip communication devices may be particularly advantageous for floating offshore wind turbines due to the robustness of such communication devices, e.g. radio frequency antennas, which is required in the harsh conditions existing in the environment of a floating offshore wind turbine.

Advantageously, the at least one control signal CS is determined dependent on one or more historical values relating to the motion related parameter MRP of the at least one blade. Hereby it is possible to adapt the control signal in relation to a historical value or set of historical values of the accumulated blade loads from the conditions of sea and wind and/or a remaining lifetime value of the blade. It is also possible to compensate for behavioral changes of the at least one blade over time e.g. changes of blade stiffness or changes due to wear by including historical values reflecting the state of the blade when determining the control signal.

Advantageously, a blade load reduction action is performed on the floating offshore wind turbine in response to the control signal CS by pitch controlling of said at least one blade. Hereby it is possible to control blade loads and avoid severe damage and strain on the floating offshore wind turbine caused by the conditions of sea and wind. After the blade pitch correction has been performed, a new measurement may be performed. The blade load reduction action may be repeated if the new measurement indicates that further corrections are needed.

Reduction or change of the blade loads may include reduction or change of blade-oscillations, rotor fore-aft rotations and tower collision risk. The blade load reduction may prevent damages of the at least one blade and increase the lifetime of the blade. This blade load reduction may further reduce the strain and stresses in other wind turbine components, such as pitch bearing, main bearing units due to reduced bending moment, and yaw bearing.

A second aspect of the invention relates to a wind turbine control system for controlling a floating offshore wind turbine arranged to be operated at sea, the floating offshore wind turbine comprises a tower, a rotor with at least one blade and a floating buoyancy structure arranged for supporting the tower, where the wind turbine control system is arranged to:
- measure at least one motion related parameter MRP of the at least one blade where the motion related parameter MRP is measured as a dynamic state or change of the at least one blade, said motion related parameter MRP depends on conditions of sea and wind, and
- determine at least one control signal CS for controlling the floating offshore wind turbine, where the at least one control signal is determined dependent on said at least one motion related parameter MRP of the at least one blade.

The wind turbine control system is in an embodiment of the second aspect connected to:
- blade motion detectors arranged to measure said conditions of sea and wind, e.g. the blade motion detectors are accelerometers arranged to measure motion of portions of the at least one blade,
- optical fiber sensors arranged along the at least one blade arranged to measure changes in strain at different locations of the at least one blade,
- strain sensors located at different locations of the at least one blade arranged to measure changes in strain, and/or
- radio-frequency based antenna systems comprising root and tip communication devices arranged to measure deflection values of the at least one blade.

Another embodiment of the wind turbine control system is arranged to determine the at least one control signal CS according to the second aspect for a pitch control system of said at least one blade. Advantageously, the control signal may be determined dependent on blade loads in order to control future levels of loads on the floating offshore wind turbine.

A third aspect of the invention relates to a floating offshore wind turbine comprising a tower, a rotor with at least one blade, where the floating offshore wind turbine is arranged to be supported by a floating buoyancy structure, where the floating offshore wind turbine further comprises a wind turbine control system according to the second aspect and where said wind turbine control system being in communicating with a pitch control system coupled to said at least one blade.

In general the various aspects of the invention and embodiments thereof may be combined and coupled in any way possible within the scope of the invention. These and other aspects, features and major advantages of the invention will be apparent from and elucidated with reference to the embodiments described hereinafter.

### BRIEF DESCRIPTION OF THE DRAWINGS

Embodiments of the invention will be described, by way of example only with reference to the drawings, in which
- Fig. 1: shows a floating offshore wind turbine,
- Fig. 2: shows a wind turbine control system for controlling a floating offshore wind turbine according to an embodiment of the invention,
- Fig. 3a: shows an upwind floating offshore wind turbine,
- Fig. 3b: shows dynamic states of a wind turbine blade in a floating offshore wind turbine facing sea and wind conditions,
- Fig. 4: shows a downwind floating offshore wind turbine,
- Fig. 5: shows an example of obtaining motion related parameter depending on one or more input values,
- Fig. 6: shows an example of determining a control signal for controlling the floating offshore wind turbine,
- Fig. 7: shows another example of determining a control signal for controlling the floating offshore wind turbine, and
- Fig. 8: shows an example of a wind turbine control system for a floating offshore wind turbine.

### DESCRIPTION OF EMBODIMENTS

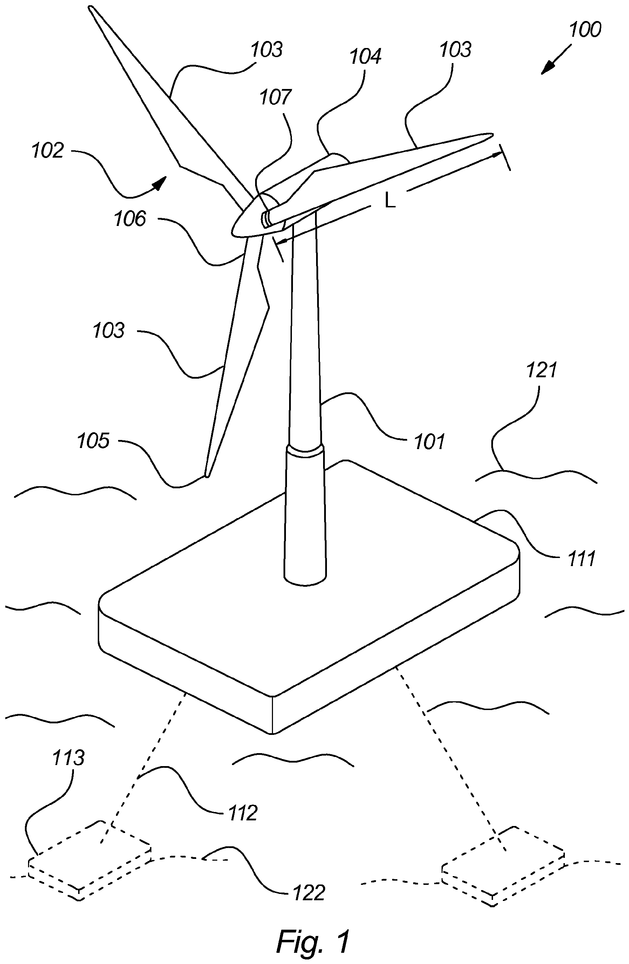

Fig. 1 shows a floating offshore wind turbine 100 comprising a tower 101 and a rotor 102 with at least one rotor blade 103. The rotor is connected to a nacelle 104 which is mounted on top of the tower 101. The nacelle 104 comprises a generator arranged to be driven by the rotor 102. The rotor 102 is rotatable by action of the wind. The wind induced rotational energy of the rotor 102 is transferred via a shaft to the generator. Thus, the wind turbine 100 is capable of converting wind energy into mechanical energy by means of the rotor 102 and capable of converting the mechanical energy into electric power by means of the generator.

The pitch or angular position of each of the rotor blades is adjustable with a pitch mechanism 107 around the longitudinal direction of the blades at the blade root 106. The pitch can be adjusted - by means of pitch actuators - to modify the aerodynamic properties of the blades and, thereby, to modify how efficient the wind energy is harvested by the rotor 102. The pitching action performed by the pitch actuators is controlled by a wind turbine control system.

The floating offshore turbine 100 is a mounted on buoyancy structure 111 arranged for supporting the tower 101. The floating offshore wind turbine 100 may be rigidly mounted on the buoyancy structure 111, e.g. by means of a bolted connection. The buoyancy structure 111, e.g. a floating support structure, may be any structure arranged to provide a support for the tower 101. The buoyancy structure 111 has buoyancy so that the buoyancy structure 111 with the wind turbine floats at or below the surface of the sea 121.

The buoyancy structure 111 is anchored at the seabed 122. The anchoring may be achieved in different ways, e.g. as illustrated by means of one or more mooring lines 112 of a mooring system which connect the buoyancy structure 111 with seabed foundations or anchors 113. The mooring lines 112 may be catenary mooring lines or taut mooring lines.

Irrespective how the buoyancy structure 111 is designed and functions, the floating offshore wind turbine 100 has one or more degrees of freedom of motion. This may be due to the flexibility of the anchoring, i.e. since the anchoring is designed so that motion of the buoyancy structure is not constrained in one or more directions or rotations. Thus, due to effects of wind and waves, the floating offshore wind turbine may translate in one or more of forward/backward directions (surge), up/down directions (heave), and left/right directions (sway). Similarly, the floating offshore wind turbine may change orientation due to rotation about one or more of the three perpendicular axes, i.e. pitch, yaw, and roll rotations. Pitch rotation of the wind turbine refers to rotation in the fore-aft direction, i.e. in a direction perpendicular to the rotor plane. This is in contrast with offshore or on-shore wind turbines which have a ground or seabed foundation which constrains or substantially constrains motion of the wind turbine relative to the ground or seabed. Such wind turbines are hereafter referred to as traditional wind turbines. Although the tower of such traditional wind turbines may deflect due to effects of the wind, rigid body motion of traditional wind turbines is non-existing or so small that the motion substantially does not affect loads on the wind turbine.

Due to the buoyancy structure 111, loads on the blades caused by wind and further by waves, ocean currents or a combination thereof. The loads on the floating offshore wind turbine therefore differs compared to traditional wind turbines.

Effects of the wind and waves due to the buoyancy structure 111 may cause blade-oscillations, blade-deflections, collision of the tip 105 of a wind turbine blade 103 with the tower 101, increased operation of the wind turbine blades 103 or other blade loads or loads on a component of the wind turbine 100. The increased operation of the wind turbine due to the buoyancy structure may include increased pitching operations of the blades, e.g. pitching which is necessary due to increased forward/backward motion amplitudes of the tower 101 or pitching necessary to damp blade oscillations. The additional pitching of the blades could also confer an increase in blade loads, e.g. blade oscillations or actuator wear.

The components of the wind turbine, which may be exposed to loading due the due to the buoyancy structure 111, comprises blades 103, the tower 101, pitch actuators of a pitch mechanism 107 for pitching one blade 103, the buoyancy structure 111, the gear train, the generator, yaw actuators for rotating the nacelle 104 and other wind turbine components.

The loading due to the buoyancy structure 111 may lead to a failure or reduced lifetime of the blades due to effects of the blade loads, e.g. stresses, deformations, fractures of the blades and other effects of the blade loads. The lifetime of other wind turbine components may also be affected by the loading due to the buoyancy structure 111.

Due to the possibility of yaw rotations of the wind turbine 100, i.e. rotations around a longitudinal axis of the tower 101, the rotor plane (i.e. a common plane of the rotor blades 103) may deviate angularly from an optimal orientation perpendicular to the wind direction. This deviation may lead to an increase of the blade loads.

Additionally, due to the degrees of freedom of the buoyancy structure 111, the wind turbine 100 may be perform rigid body oscillations, e.g. oscillating rotations about one or more of the pitch, yaw, and roll axes. Such wind turbine oscillations could excite oscillations of the blades 103.

Blade oscillations are generally undesired as they may lead to stresses which may reduce the lifetime of the blades or they could result in collisions of the blade tips 105 with the tower 101 leading to factures of the blades 103.

According to the examples described above and other examples wind and waves may induce undesired blade loads. Accordingly, different conditions of the wind and waves, e.g. different wind speeds and wave heights, may have different influences on the blade loads.

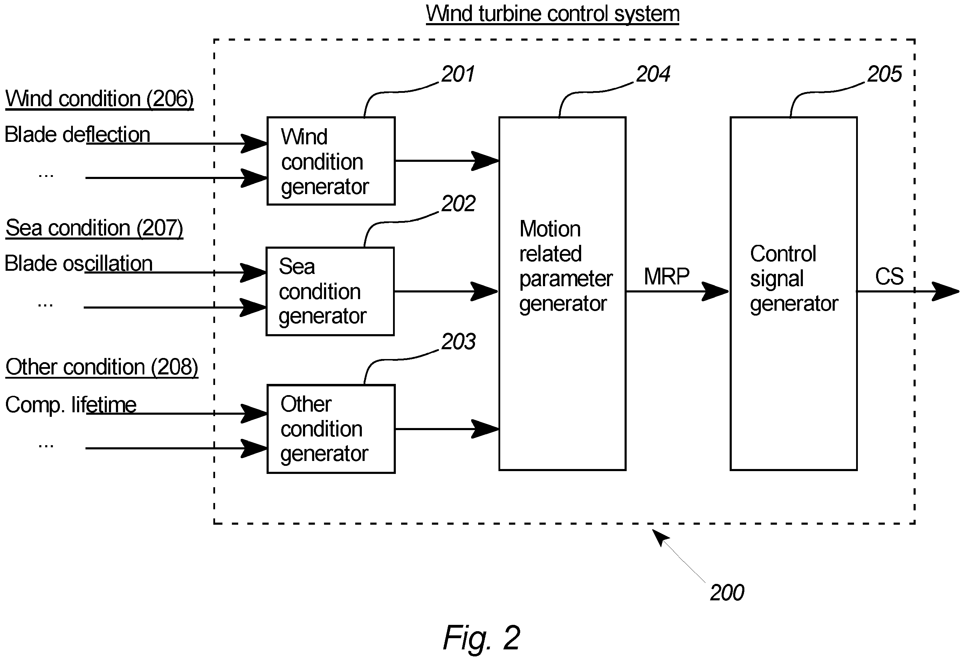

Fig. 2 shows a wind turbine control system 200 for controlling the floating offshore wind turbine 100 according to an embodiment of the invention. The control system 200 is arranged to obtain at least one motion related parameter MRP of one or more of the blades 103 depending on the conditions of the sea and wind. Motion related parameter MRP signals may be generated in a motion related parameter generator 204 by signals from wind condition generators 201, sea condition generators 202 and/or other condition generators 203 related to the floating offshore wind turbine.

The wind turbine control system 200 is arranged to obtain the motion related parameter MRP depending on wind and sea condition inputs received from different types of blade motion detectors 206-208. The blade motion detectors may include detection of wind condition 206 such as detectors arranged to detect blade deflection, detection of sea condition 207 such as detectors arranged to detect blade oscillations reflecting the strength and frequency of waves hitting the buoyancy structure of the wind turbine and/or detection of other condition 208 using suitable detectors. The inputs from the different types of blade motion detectors 206-208 are converted in the wind condition generators 201, sea condition generators 202 and/or other condition generators 203 which generate suitable signals reflecting the sea and wind conditions. These signals are used as inputs for the motion related parameter generator 204.

Control signals CS for controlling the floating offshore wind turbine such as the pitch of the blades in the wind turbine rotor are generated in a control signal generator 205 of the wind turbine control system 200 and are based on the signals, i.e. the at least one motion related parameter MRP, from the motion related parameter generator 204.

Practical examples of the detector 206 for wind conditions may include accelerometers arranged to measure motion of portions of the blades 103, optical fiber sensors arranged along a blade 103 to measure changes in strain at different locations of the blade, strain sensors located at different locations of the blade arranged to measure changes in strain, and radio-frequency based antenna systems. Based on this or there measurements, e.g. the strain measurements, it is possibly to calculate one or more relevant values, e.g. blade deflection values. The wind turbine control system 200 may be configured to perform such calculations.

The motion related parameter MRP of the blades 103 may comprise or relate to one or more of the following: a blade deflection value; position data, velocity data, or acceleration data of one or more locations of a blade; an oscillation amplitude of a blade; strain or stress values of a blade; a distance between a blade 103 and the tower 101, i.e. a tower clearance. The motion related parameter may be or comprise a measured parameter, an estimated present parameter or a predicted future parameter such as a predicted blade bending value.

According to an embodiment, the wind turbine control system 200 is arranged to determine sea and wind conditions of the floating offshore wind turbine. The condition of the sea may comprise a condition of waves, ocean currents of the sea, other conditions or a combination thereof The detector 207 for sea conditions may describe and detect how a condition of the sea affects the conditions of wind turbine components, e.g. the blades 103. Such conditions of wind turbine components may include loads, e.g. loads which as described may lead to harmful stresses, harmful deformations, fractures and wear of the components, e.g. blades, and, thereby, to failures, reduced lifetime or reduced performance of the components. The detected condition of the sea may be transformed into a control signal CS via the sea condition generator 202, the motion related parameter generator 204 and the control signal generator 205 which can be used for controlling the wind turbine to reduce the loads, e.g. to prevent occurrence of harmful loads from the condition of the sea. The condition of the wind may especially comprise a condition of wind speed.

For example, the generated signals in the wind turbine control system 200 may be based on a tower clearance threshold, load threshold of the blades or other protective values which is modified according to the detected sea and wind conditions.

The motion related parameter MRP of the at least one blade is determined on basis of the conditions of the sea and wind comprising a condition of waves, wind, ocean currents of the sea, other conditions or a combination thereof. For example, the motion related parameter could be determined based on a functional relationship, e.g. a model of the floating offshore wind turbine 100 descriptive of the motion related parameter to the conditions of the sea and wind. Alternatively, the motion related parameter could be determined based on empiric data, e.g. in the form of a look up table or other functional relationship which relates the motion related parameter to the conditions of the sea and wind. The empiric data may have been obtained by measuring loads or other conditions of the sea and wind, e.g. different wave heights relating to size of blade oscillations or wind speed relating to blade deflections. The empiric data may be expanded or refined during operation of a wind turbine 103, e.g. by means of an updating function or machine learning algorithm implemented in the wind turbine control system 200 configured to update the functional relationship based on empiric data. In this way it is possible to determine or estimate one or more relevant parameters, e.g. a blade load, as a function of the sea and wind operational data.

For example, the motion related parameter MRP may be determined dependent on a condition of the sea, e.g. a condition of the waves such as an estimated or measured wave height, wave type and/or wave frequency.

The motion related parameter MRP could additionally or alternatively be determined dependent on estimated or measured wind speeds and/or the value of ocean currents.

Since the motion related parameter MRP of the at least one blade, e.g. blade deflections, is affected by the condition of the sea, e.g. waves, there is a functional relationship between the motion related parameter and the condition of the sea. For example, the wave motions will indirectly result in an amount of blade deflection depending on the properties of the waves. For example, a floating offshore wind turbine may experience rotations, e.g. in the fore-aft direction or yaw direction (for example, the mooring lines 112 may cause an oscillation around the yaw direction) which will cause oscillation of the blades. Accordingly, measurements of motion related parameters of the blades 103 can be used for estimating a condition of the sea, e.g. by use of a model or empirically obtained data. The model may for example be a Kalman filter, a neural network model or a physical model.

As another example, the motion related parameter MRP could be further determined on basis of an existing control signal, e.g. a pitch control signal extracted from a pitch control system for the at least one blade (e.g. partial and full load controllers of the wind turbine). For example, a floating offshore wind turbine may experience fore-aft rotations which due to the floating nature of the wind turbine may be larger than fore-aft tower bending oscillations of traditional wind turbines. In order to avoid a negative damping which would result in growing fore-aft rotations of the floating offshore wind turbine, the pitch control system of a floating offshore wind turbines may be arranged to determine such growing fore-aft rotations and, in response hereto, to determine a corrected pitch control signal for compensating this growing fore-aft rotations.

Thus, irrespective of which data the motion related parameter is based on, the motion related parameter may quantify an effect of the condition of the sea on a wind turbine component so that the motion related parameter and the wind turbine control system 200 can be used for controlling the wind turbine. For the purpose of controlling the wind turbine, e.g. to prevent undesired loads on a wind turbine component, the determination of the at least one motion related parameter may include predicting at least one future motion related parameter, so that control actions, e.g. pitching actions, can be invoked in time before occurrence of a possible harmful load for the floating offshore wind turbine.

The sea condition generator 202 and/or the wind condition generator may be data receivers capable of receiving sea and wind condition data, e.g. weather data or marine data and/or associated metadata, from an external source such as weather satellites and/or oceanographic data centres. The wind turbine control system 200 may be comprised by the wind turbine 100.

The conditions of the sea and wind are conditions which can be measured, estimated or predicted. A prediction or estimation of a condition of the sea and wind may be performed by the wind turbine control system 200 based on measured data relating to the sea and wind conditions. For example, as explained elsewhere the motion related parameter may depend on the sea and wind conditions and, therefore, the prediction of a condition of the sea and wind may be performed based on measured motion related parameter. For example, a measured deflection of a blade in a given direction with a given amplitude may be transformed into parameter of the condition of the wind, e.g. based on an empirically obtained look-up table. For example, a measured oscillation size or frequency of a blade may be transformed into parameter of the condition of the sea in relation to wave height and wave frequency, e.g. based on an empirically obtained look-up table.

Thus, a predicted occurrence of a condition of the sea and wind may be determined by the wind turbine control system 200, e.g. on basis of the input from detectors of wind and sea condition 206, 207 as well as inputs from detectors of other conditions 208.

In general a prediction of a motion related parameter refers to prediction of a future value or a plurality of values of the parameter. Estimation may refer to an estimation of a present or future value or values of the parameter.

Examples of the detector 207 for sea condition include accelerometers which are arranged to measure accelerations in one or more of the motional degrees of freedom of the floating offshore wind turbine. Based on the measured accelerations, it is possible to determine motion components of the wind turbine which are caused by the waves and, therefore, the measured accelerations can be used for determining conditions of the sea such as wave heights and wave frequencies.

According to another example, the detector 207 for sea condition may be the same as or may use signals from a detector 206 for wind condition such as a blade deflection detector. Since the motional degrees of freedom of the wind turbine may be determined based on determined blade deflections of the blades then - instead of measured accelerations of the wind turbine - the conditions of the sea and wind may be determined based on these signals.

The wind turbine control system 200 is further arranged to determine a control signal CS for controlling the wind turbine. The control signal is based on the motion related parameter of the at least one blade determined depending on sea and wind condition. The control signal may be provided by an output of the wind turbine control system 200.

Accordingly, the control signal CS may be determined dependent solely on the motion related parameter of at least one blade as generated by the motion related parameter generator 204. Since the condition of the sea and wind, e.g. wave heights, wave type, wave frequency and/or wind speed, may be determined based on the motion related parameter, e.g. blade oscillation and/or deflection amplitudes, the wind turbine control system 200 may be configured to determine the control signal solely dependent on the motion related parameter of at least one blade.

Algorithms of wind and sea condition generators 201, 202 may be arranged to determine the conditions of the wind and sea from detected internal blade values in the floating offshore wind turbine 100. For example, a sea condition could be determined as an intermediate blade variable in an algorithm of the sea condition generator 202. For example, a wind condition could be determined as an intermediate blade variable in an algorithm of the wind condition generator 201.

The control system 200 may additionally be configured to determine the control signal CS dependent on a prediction control value based on a wind condition 206, sea condition 207 or other condition 208. For example, the prediction value may be a predicted motion related parameter of the blades, e.g. a predicted blade bending or oscillation. For example, an actual motion related parameter of at least one blade, e.g. including acceleration, velocity and position data of a location of a blade, may be used for predicting a future position of the location of the blade and a future motion related parameter. Similarly, a condition of the sea provided as an input to the sea condition generator 202 of the control system 200 could be used for predicting a future sea condition, e.g. a predicted worst case wave height. Accordingly, the prediction control value may be an internal representation in the wind turbine control system 200 of a predicted motion related parameter such as a blade bending, a predicted sea condition such as a predicted wave condition or a predicted tower clearance.

For example, the control signal CS may a pitch adjustment signal for adjusting the pitch control signal from a pitch control system to a blade 103 in the wind turbine rotor. The pitch adjustment signal may be combined, e.g. added, with a pitch control signal determined by other pitch control systems, e.g. full load controllers or optimal pitch determination controllers.

As another example, the control signal CS may be a damping signal for adjusting a damping action of the wind turbine 100, e.g. for damping of oscillations of the blades 103 or rigid body rotations (e.g. fore-aft rotations) of the floating offshore wind turbine 100. The damping signal may modify an existing damping action signal, e.g. by intensifying the damping action.

The control signal CS could also be in the form of a signal for introducing or modifying a de-rated operation of the floating offshore wind turbine, e.g. in order to control the floating offshore wind turbine 100 to produce a reduced amount of power. The reduced power level is lower than the nominal power level of the floating offshore wind turbine. The control signal CS could also be a shutdown signal for invoking a shutdown of the floating offshore wind turbine.

The wind turbine control system 200 may specifically be arranged to control floating offshore wind turbines 100 for the purpose of reducing a load of a wind turbine component caused due to the floating buoyancy structure, i.e. due to conditions of the sea such as waves on the floating offshore wind turbine 100.

Reduction of a load of a wind turbine component, e.g. blade loads, may include reduction of blade-oscillations, tower collision or tower collision risk or other load of the wind turbine or blade loads as described above. Reduction of the blade loads may prevent damages of wind turbine components, tower collisions, and may increase the lifetime of wind turbine components, e.g. blades 103.

In addition to the examples of the detectors of wind, sea or other conditions 206-208 mentioned above, a detector of blade deflection may be embodied by a number of communication devices, e.g. radio frequency antennas, located at one or more of the blades 103. For example, a blade 103 may comprise at least one tip communication device located at the tip end of the blade 103 and at least one root communication device located towards the root end of the blade 103. The at least one root communication device is arranged to enable wireless radio communication with the at least one tip communication device via a wireless communication path. Based on the communication data, the system of the communication devices and a suitable signal processor is able to monitor the distance between the at least one tip communication device and the at least one root communication device to determine a movement of the at least one tip communication device relative to the at least one root communication device. The movement of the tip communication device is indicative of a blade deflection and may also be an indication of blade oscillation. The at least one root communication device may be provided on at least one bracket projecting from an external surface of the blade 103 at the root end. Due to the bracket, the root communication device is spaced from the external surface of the blade 103 to minimize path loss in the communication path between the communication devices.

The determination of the movement of the tip communication device may be performed based on changes in the signal strength of the signal received by one of the communication devices, changes in the signal-to-noise ratio of the received signal or changes in the time-of-flight of the signal between the communication devices.

Accordingly, a detector may be arranged to estimate a blade deflection of the blade 103 based on a transmission of a radio frequency signal between antennas comprised by the one or more blades 103. For example, the blade deflection may be obtained by transmitting a signal between the tip communication device and the a root communication device, calculating a distance between the tip communication device and the root communication device based on the transmitted signal, and by estimating the blade deflection based on the calculated measurement.

Further details of the detector of blade deflection embodied by means of communication devices is described in patent publication WO 2014/027032 which is hereby incorporated by reference.

The wind turbine control system 200 may include data processors for performing various processing operations and methods described herein.

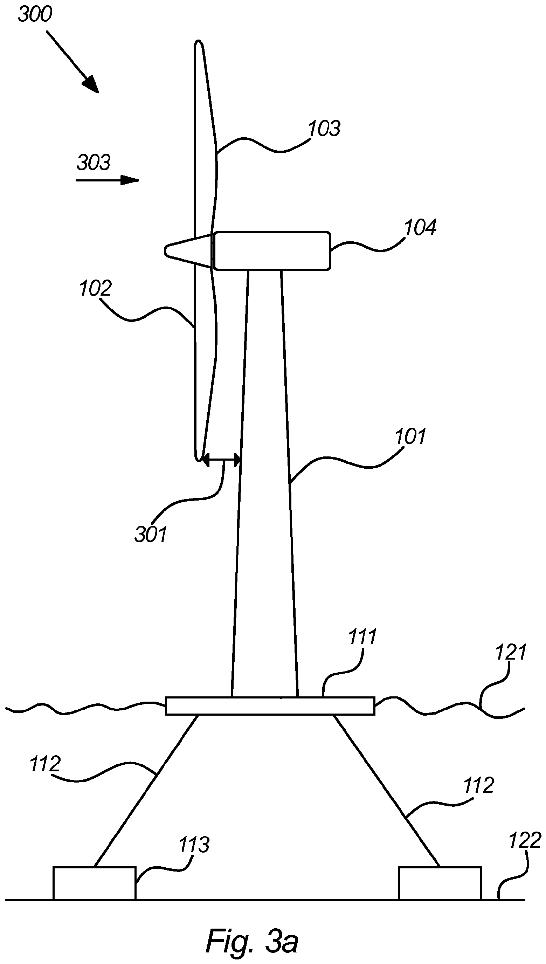

Fig. 3a shows an upwind floating offshore wind turbine 300. For an upwind turbine 300, the wind 303 has a direction which causes a bending of the blades 103 at the blade tips 105 towards the tower 101. Due to the blade bending, there is a risk for a tower collision where the tip 105 of a blade 103 collides with the tower 101. Thus, in addition to the blade loads and loads on other wind turbine components, the upwind turbine 300 is in danger of experiencing tower collisions.

To avoid tower collisions a safety requirement may be set, e.g. by requiring that the tower clearance 301, i.e. the distance between the blade 103 and the tower 101, satisfies a tower clearance requirement, e.g. by requiring that the tower clearance 301 is greater than a tower clearance threshold.

In order to avoid tower collisions it may be required to predict a future tower clearance 301. The tower clearance 301 may be determined based on deflection data of the rotor blades 103 and rotor data being indicative of the azimuth position and rotation speed of the rotor 102. The deflection data may include data of position, speed and acceleration, including acceleration in a direction perpendicular to the rotor plane. For example, the deflection data may be obtained from the motion related parameter of the at least one blade, or the motion related parameter or parameters may comprise the deflection data. Equations for determining the prediction of a future tower clearance 301 based on deflection data and rotor data is described in patent publication WO 2013/000810 which is hereby incorporated by reference. WO 2013/000810 describes that also wind speeds as a condition of wind may be utilized for predicting a future tower clearance 301.

For a floating offshore wind turbine, the tower clearance 301 is affected by conditions of the sea and wind, e.g. wind, waves or ocean currents due to the floating buoyancy structure. Thus, whereas the tower clearance of traditional wind turbines may be affected by wind loads, the tower clearance of a floating offshore wind turbine may additional depend on conditions of the sea due to the floating buoyancy structure. For example, due to the floating buoyancy structure, a wave impact may case an additional deflection of the blades 103 which may cause a tower impact by the blade tip 105. The degree of additional deflection may depend on the conditions of the sea, e.g. the wave heights and frequencies.

In order to reduce the risk for tower collisions for floating offshore wind turbines, the motion related parameter may be determined in relation to values of a possible tower collision, e.g. as predicted values of a possible tower collision. The tower collision values may be in the form a required tower clearance such as a tower clearance threshold, a tower collision risk or a predicted tower clearance. The wind turbine may be controlled dependent on the values of possible tower collision, e.g. so that the predicted future tower clearance 301 is greater than a predetermined tower clearance safety threshold.

The values of possible tower collision may be determined according to the method described above for predicting a future tower clearance 301 using the condition of the wind where the method further includes loads caused by the condition of the sea due to the floating buoyancy structure 111, where these loads affect the tower clearance 301.

The wind turbine control system 200 may be configured to determine the control signal CS dependent on the determined motion related parameter of the at least one blade so as to increase the tower clearance 301 according to the methods described for determining the control signal CS on basis of the determined blade load. For example, the motion related parameter of the blades may be used for predicting tower clearance values, e.g. the tower clearance value for the next tower passage of a blade 103. The wind turbine control system 200 may be configured to compare the predicted tower clearance with the required tower clearance threshold, and to determine the control signal CS to ensure that the predicted tower clearance satisfies the required tower clearance threshold.

Due to the stochastic nature of the condition of the sea it may be necessary to determine a predicted future blade load, a predicted value of possible future tower collision or other conditions so that the future motion related parameter takes into account this stochastic nature, e.g. takes into account the occurrence of a severe condition of the sea or a worst case condition of the sea, e.g. a worst case wave height.

Therefore, the motion related parameter may be determined to take into account the possibility of an occurrence of a given condition of the sea and wind, e.g. a worst case condition of the sea and/or a worst case condition of the wind. Thus, the motion related parameter may be determined as a predicted worst case condition of the sea and wind, or generally as a predicted occurrence of a specific condition of the sea and wind in the future, e.g. as a predicted occurrence of a motion related parameter with a given value, e.g. a worst case value. For example, the predicted occurrence of a worst case blade deflection or the predicted occurrence of a blade deflection with a given deflection amplitude may be determined.

The predicted motion related parameter may be in the form of a threshold which need to be satisfied, e.g. by a value derived from the motion related parameter of the at least one blade. The predicted motion related parameter may be in the form of a control reference. The control reference may be used e.g. for minimizing a difference between the control reference and the motion related parameter or a value derived or from the motion related parameter, such as a blade deflection or a tower clearance.

For example, the predicted occurrence of a specific motion related parameter may be determined based on a predicted occurrence of a condition of the sea and wind, e.g. a worst case condition of the sea, such as a worst case wave height and/or a worst case condition of the wind, such as a worst case wind speed. For example, the motion related parameter, i.e. the predicted occurrence of a specific motion related parameter, could be determined dependent on a probability distribution of wave heights indicating the probability of occurrence of different wave heights within a future period of time; or the motion related parameter could be set at as an assumed worst case motion related parameter. Thus, according to an embodiment, the determination of the condition of the sea and wind may include predicting the occurrence of at least one condition of the sea and wind.

As another example, the predicted occurrence of a specific motion related parameter may be determined based on a present condition of the sea and wind, e.g. by including a term (e.g. a predetermined value) in the prediction of the motion related parameter which accounts for the stochastic nature of the condition of sea and wind.

In general the motion related parameter P may be determined as a function of an input value or values x: P=f(x). For example, the input value may be a condition or different conditions of the sea and wind. The function f may be arranged so that the determined P includes a part which takes into account the stochastic nature of the condition of the sea and wind. For example, the function f may simply be represented by a look up table having entries which takes into account the stochastic nature of the sea conditions and the stochastic nature of the wind conditions. For example, the entries may have been obtained from empiric data.

For example, the tower clearance as an example of motion related parameter could be determined according to the function f(x)=fl (a, b) + f2(x), where f1 determines a part of the predicted tower clearance based deflection data (a) of the rotor blades 103 and rotor data (b) influenced by the conditions of the wind. The data may include the azimuth position and rotation speed of the rotor 102 as described in detail above. Function f2 determines another part of the predicted tower clearance influenced by the conditions of the sea such as blade oscillations. Thus, f2 may be based on the input x including estimated or predicted motion related parameters of the blades and/or estimated and predicted conditions of the sea.

As a specific example, a predicted or estimated tower clearance parameter of the function f may be obtained based on a measured worst case tower clearance 301 within a period having a determined average wave height and wind speed (determined based on the motion related parameter of the blades influenced by the conditions of the sea and wind).

Thus, in general the motion related parameter may be determined as a present motion related parameter or a predicted future motion related parameter, e.g. by a function f as described.

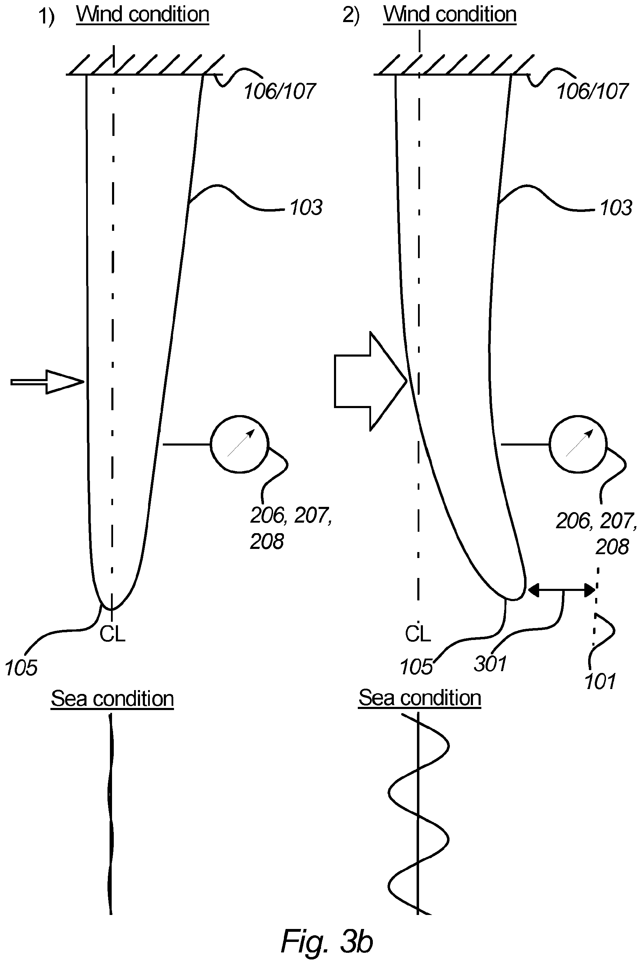

Fig. 3b schematically shows dynamic states of a wind turbine blade 103 in a floating offshore wind turbine facing sea and wind conditions.

The blade root 106 is attached to the hub of the wind turbine via a pitch mechanism 107 allowing the blade 103 to be adjusted around the longitudinal direction of the blade as illustrated with the center line CL. The blade may be pitched around the center line CL in order to control the load of the blade. The blade root 106 with the attachment to the hub via a pitch mechanism 107 is illustrated in both drawings as being in a static state or substantially static state in relation to the condition of wind and sea e.g. in relation to the wind speed resulting in no or very little bending of the blade 103 at the blade root 106.

The blade 103 from the root toward the blade tip 105 is in a dynamic state and especially the blade tip may bend and oscillate significantly. The extent of bending and oscillation of the blade tip will reflect the condition of sea and wind e.g. an intensifying wind speed will result in an increasingly more bend blade tip as schematically illustrated in the first and second drawing. The condition of sea and wind or other conditions are measured in or at the blade as indicated with the symbols for with measuring means of wind condition 206, of sea condition 207 and/or of other conditions 208.

The blade tip 105 may bend toward a tower 101 of the floating offshore wind turbine as also illustrated in the second drawing.

The blade 103 may also be excited and start oscillating when the wave height and frequency change to values in close proximity of the natural blade frequency as also illustrated in the second drawing. As an example, a blade may have a deflection mode with a natural frequency around 1 Hz. Accordingly, if the frequency of the waves having a significant wave height is also around 1 Hz, the floating offshore wind turbine will also have motion component with a frequency around 1 Hz. This motion component of the wind turbine may excite the 1 Hz oscillation mode of the blades.

The floating offshore wind turbine including the rotor may also perform fore-aft rotations as a result of sea and wind conditions. The fore-aft rotations may be measured, estimated and/or predicted at static locations of the blade e.g. at a location of the blade root.

Bending of the blade tip may eventually result in a blade collision with the tower and the blade oscillation or the fore-aft rotations may damage the rotor of the floating offshore wind turbine unless the blade load is altered e.g. by pitching the blades out of the wind or by introducing cyclic pitch variations.

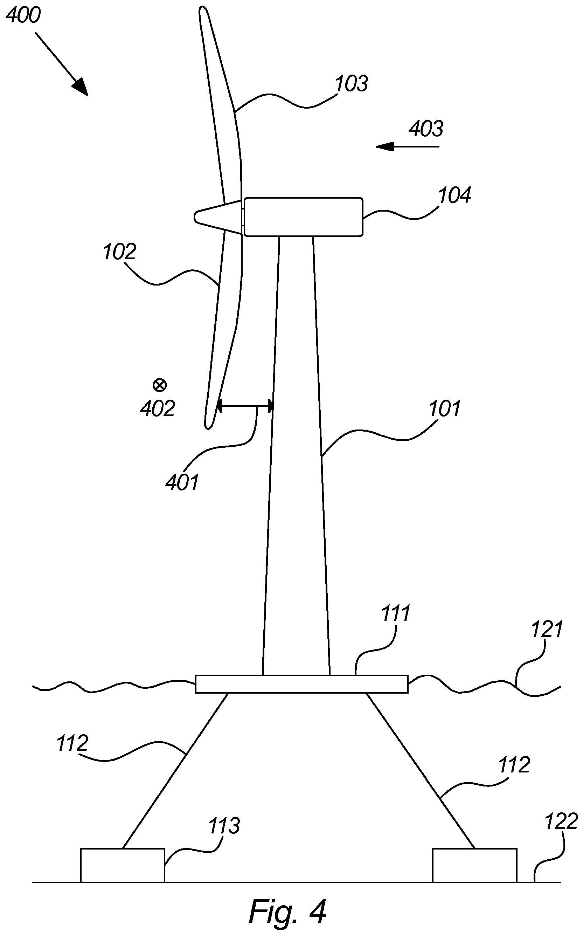

Fig. 4 shows a downwind floating offshore wind turbine 400 in a situation where the wind turbine experiences a load of the blades and, therefore, also other components of the wind turbine. For a downwind turbine 400, the wind 403 has a direction which causes a bending of the blades 103 away from the tower 101. The load of the wind turbine components is affected by conditions of the sea and wind, e.g. wind, waves or ocean currents due to the floating buoyancy structure. Thus, whereas the components of traditional wind turbines also experiences loads, e.g. due to wind loads, floating offshore wind turbines may experience additional loads due to the floating buoyancy structure.

For example, due to the floating buoyancy structure, the blades 103 may deflect or oscillate e.g. in a forward/backward direction 401 perpendicular to the rotor plane, in a sideways direction in the rotor plane 402, or in a combination of directions, e.g. as determined by natural oscillation modes of the blades 103. As previously explained, such deflection or oscillation loads may have different causes, e.g. caused by wave impacts, wind speeds or other direct or indirect wind or wave effects.

The wind turbine control system 200 may be configured to determine the motion related parameter as a load value of a component of the wind turbine such as the blades. The load value could be determined solely dependent on the condition of the sea and wind or possibly the load value could be determined dependent on the condition of the sea and wind and other conditions of the floating offshore wind turbine.

For example, the load value could be in the form of a prediction of a possible blade load, e.g. a possible oscillation amplitude or a possible deflection amplitude of a blade. The prediction of the possible blade load, e.g. a possible blade load within the near future, could be determined as a load risk, e.g. a load risk parameter in the form of a probability that the load exceeds a given load threshold. Similarly, the load risk could be in the form of a probability distribution, e.g. a normal distribution, of probabilities of different load thresholds that may be exceeded in the near future. Accordingly, the load value could be in the form of a load risk, e.g. a load risk extracted from the probability distribution. In general the load value need not be limited to a single value, e.g. a single load risk value, but may include a plurality of values.

Alternatively, the load value could be in the form of an estimated or predicted load threshold, e.g. a deflection threshold of a blade.

According to an embodiment, the determination of the least one motion related parameter comprises predicting at least one future motion related parameter such as the load value, i.e. a predicted load value. Thus, in general the at least one motion related parameter may comprise at least one future or predicted motion related parameter. The prediction of a future motion related parameter may be performed on basis of the motion related parameter of the at least one blade, the condition of the sea, previous motion related parameters, or a combination thereof.

The wind turbine control system 200 may be configured to determine the control signal 203 dependent on the motion related parameter of the at least one blade as a load value, e.g. by determining a control signal which changes the pitch of the blades 103 in order to reduce the aerodynamic efficiency of the blades or the thrust force on the blades 103 and, thereby, to reduce the future blade bending amplitudes. Alternatively, the control signal 203 may invoke increased damping of blade oscillations or tower rotations in order to reduce future oscillations amplitudes of the blades and/or the tower. The damping of blade and tower oscillations may be performed by introducing cyclic variations of the pitch of the blades 103 to counteract the oscillations.

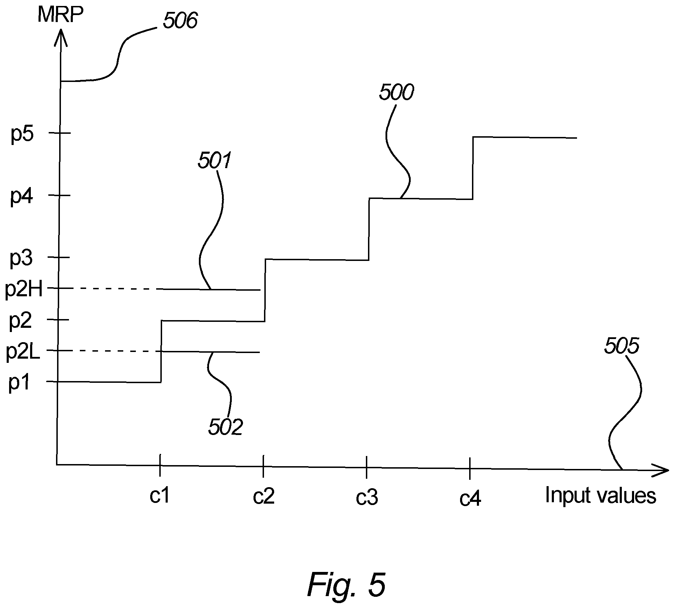

Fig. 5 shows an example of obtaining a motion related parameter MRP / 506 dependent on one or more input 505 such as condition of sea and wind. The determined motion related parameter 506 may include a present motion related parameter, a predicted future motion related parameter or both types of parameters.

The motion related parameter values p1-p5 are shown along the ordinate axis as a function of input values c1-c4 along the abscissa. The input values may be determined conditions of the sea and wind such as a predicted or measured condition of the sea, of the wind or other input values relating to the conditions of the floating offshore wind turbine. The curve 500 shows a functional relationship between the motion related parameter and input values. Accordingly, for an input value below c1 the motion related parameter has the value p1, for values of the input value above c1 and below c2 the motion related parameter has the predicted value p2, etc. The motion related parameter values p1-p5 of the curve 500 may be estimates of actual input values. Alternatively, the values p1-p5 of the curve 500 may be predicted future values of the motion related parameters having the highest probabilities of occurring within a given period of time for different values of the inputs. The functional relationship 500 for predicting a motion related parameter may include other curves or functional relationships 501, 502 for determining predicted values p2L and p2H having other probabilities of occurring, e.g. lower and higher probabilities. For convenience, only a part of the curves 501, 502 and only p2L and p2H are shown.

In addition to determining the at least one estimated motion related parameter, the probability of an occurrence of the estimated motion related parameter may be determined. As an example, the probabilities of occurrences of one or more of the predicted values p2, p2L and p2H may be obtained. The probabilities may be obtained by determining the probabilities e.g. based on a stochastic model of the condition of the sea and wind. For example, a measurement of a present range of wave heights or an average wave height may be used for determining a predicted possible future wave height and its associated probability of occurrence using a stochastic prediction model of wave heights and other wave conditions. Alternatively, the probability of occurrence may be obtained from the functional relationship 500, where the functional relationship includes probabilities of occurrences associated with the different prediction values. The included probabilities may have been obtained from a stochastic model or they may be based on empiric data.

According to the example where the motion related parameter is a load value, the predicted motion related parameter may be a predicted load such as a predicted load threshold or a predicted load value. The probability of occurrence of the motion related parameter may a probability of occurrence of the predicted load, e.g. a probability that the load will exceed the predicted load threshold.

According to the example where the motion related parameter is a tower collision value, the predicted motion related parameter may be a predicted tower collision value such as a predicted tower clearance threshold or a predicted tower clearance. The probability of occurrence of the motion related parameter may a probability of occurrence of the tower clearance, e.g. a probability the tower clearance will exceed the predicted tower clearance threshold.

Thus, in general the at least one motion related parameter may comprise one or more of a present motion related parameter, a predicted motion related parameter and a probability of an occurrence of the predicted motion related parameter.

Similarly to determining the motion related parameter, the control signal may be determined on one or more of the motion related parameter depending on the condition of the sea and wind using a functional relationship similar to the functional relationship 500 in Fig. 5. Thus, the control signal may be determined using a functional relationship between the control signal and input values including the motion related parameter. Determining the control signal using a functional relationship as described in connection with Fig. 5, may be particularly relevant where the control signal is determined, not dependent on the motion related parameter, but possibly implicitly dependent on the motion related parameter and other input values.

The determination of the predicted motion related parameter and the associated probabilities of occurrence may be performed by the wind turbine control system 200, e.g. on basis of a functional relationship 500 implemented in the wind turbine control system 200 and on the basis of inputs from wind condition generator 201 and/or the sea condition generator 202.

The wind turbine control system 200 may further be configured with an updating function for updating the functional relationship 500 used for determining the motion related parameter and the control signal. The determination of an update of the functional relationship may be based on a predicted parameter and an actually determined parameter, e.g. based on a difference between the predicted parameter and the actually determined parameter.

For example, a predicted motion related parameter may be a predicted blade load, a predicted tower clearance, a predicted blade deflection as reflecting condition of sea and wind. The actually determined parameter is a parameter corresponding with the predicted parameter and may be determined based on the motion related parameter of the at least one blade and based on other measured condition values.

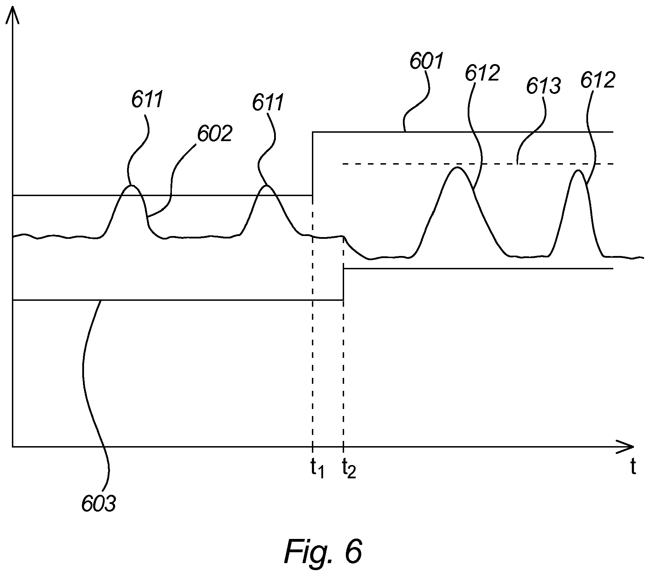

Fig. 6 shows an example of determining a control signal represented by curve 603 on the basis of at least one motion related parameter of the at least one blade depending on an actual measured condition of the sea and wind represented by curve 602 and/or dependent on a predicted condition of the sea and wind represented by curve 601. The example applies equally to the wind turbine control system 200 where the control signal is determined on the basis of at least one motion related parameter of the at least one blade depending on the actual and predicted conditions.

As an example, the latter case the curve 601 may represent the motion related parameter of the at least one blade depending on a predicted condition of the sea and wind e.g. a blade bending as predicted from wind speeds.

As an example, the curve 602 may be an actual blade load of the floating offshore wind turbine 100, e.g. a stress level such as measured blade oscillation or bending representing condition of sea and wind. The load peaks 611 may especially be caused by conditions of the sea, e.g. due to wave impacts on the floating offshore wind turbine and resulting in blade oscillations.

The motion related parameter represented by curve 601 may be a predicted load blade value, e.g. a predicted worst case load (e.g. a given load valued predicted to occur with a probability of e.g. 0.2). The motion related parameter may also be an estimated or predicted load threshold which should not be exceeded. As illustrated the peak values of the actual load peaks 611 exceed the predicted worst case load. At time t1, a change of the motion related parameter represented by curve 601 is provided. For example, due to load peaks 611 or an average value of the actual load curve 602 that exceed the motion related parameter represented by curve 601, a change of the value of the motion related parameter represented by curve 601 is determined.

Additionally or alternatively, the change of the value of the motion related parameter represented by curve 601 could be based, at least partly, on an indication of future increasing wave heights or frequencies based on information in the currently measured blade oscillation or bending e.g. increasing blade oscillations.

The control signal CS represented by curve 603 - which may be determined dependent on the motion related parameter represented by curve 601, e.g. dependent on values of the curve 602 - changes at time t2. The change of the control signal is determined so that the average blade load 602 decreases after time t2 e.g. by pitch control of the blades. Thus, as illustrated, even though the amplitudes of the load peaks 612 are greater than the amplitudes of the load peaks 611 - e.g. due to increasing wave heights - the maximum load levels are kept sufficiently low, e.g. below a desired threshold 613.

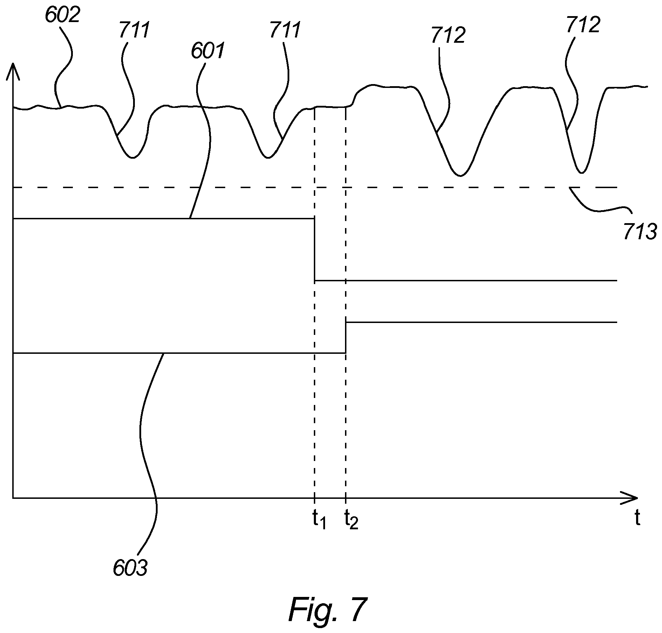

Fig. 7 shows another example of determining a control signal CS represented by curve 603 similarly to the example in Fig. 6. In this example, the curve 602 may be the clearance between tower and the bended tips of the wind turbine blades, e.g. a tower clearance determined dependent on the motion related parameter of the at least one blade and/or on other measurements.

The dips in tower clearance 711 may be caused by conditions of the sea and wind, e.g. due to wave impacts or oscillations of the blades excited by waves having a frequency near a naturally blade frequency or by wind speed. The motion related parameter represented by curve 601 may be a predicted tower clearance, e.g. a predicted worst case tower clearance. Alternatively, the curve 601 could represent a required average tower clearance or a predicted tower collision risk value. As illustrated the dips 711 does not exceed a given tower clearance threshold 713. At time t1, a change of the motion related parameter is determined, e.g. a prediction of future dips 711 which would exceed the threshold 713.

In response to determination of the change of the motion related parameter, at time t2 a change of the control signal 603 is determined which causes a change of the tower clearance so that the future tower clearance dips 712 does not exceed the tower clearance threshold 713.

According to the examples shown in Figs. 6 and 7, the control signal 603 is determined so as to change a wind turbine value related to the load value of a component of the wind turbine or the tower collision value. For example, the control signal 603 may be determined so as to change a wind turbine value, e.g. a load or a tower clearance, by a predetermined amount.

According to another example for determining the control signal 603, the control signal is determined only on the basis of a predicted and/or actual blade loads as represented by curve 602. For example, blade deflection oscillations may be excited when a natural frequency of the blades is close to a wave frequency of the waves of the sea. As an example, a blade may have a deflection mode with a natural frequency around 1 Hz. Accordingly, if the frequency of the waves is also around 1 Hz, the floating offshore wind turbine 100 will also have motion component with a frequency around 1 Hz. This motion component of the wind turbine 100 may excite the 1 Hz deflection mode of the blades. In order to avoid too large deflection amplitudes of the blades at the natural frequency, the control signal may be determined dependent on the motion related parameter of the blades which represent the blade deflections, e.g. dependent on measured or estimated blade deflections, so as to prohibit or lower blade loads caused by wave induced blade deflection oscillations.

For example, the motion related parameter may be determined as a peak amplitude of a frequency component of a frequency response of the measured or estimated blade deflections, e.g. a narrow frequency response comprising the natural frequency of interest of the blades.

Accordingly, the control signal could be determined dependent on an amplitude of a frequency response of a motion related parameter. The frequency response may be obtained by known methods such as FFT methods.

The generated control signal may for example be used for determining a pitch control signal which dampens the deflections or which controls the wind turbine to stop the rotor 102.

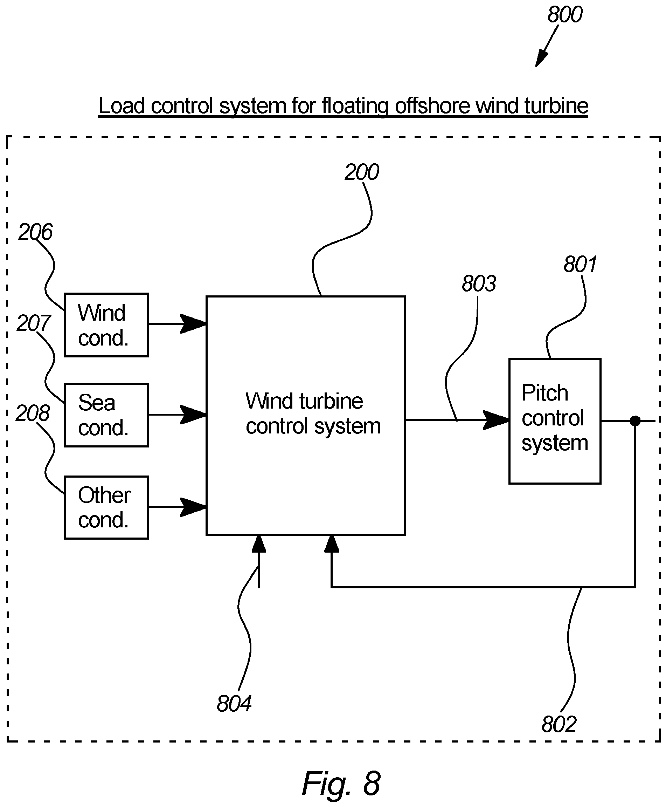

Fig. 8 shows an example of a load control system 800 for a floating offshore wind turbine which comprises a wind turbine control system 200. As explained, the wind turbine control system 200 may comprise one or more inputs of condition of the sea, condition of the wind and other conditions 206-208 to a sea condition generator 202, a wind condition generator 201 and other condition generator 203 in the wind turbine control system 200. As explained, a control signal CS is determined by the wind turbine control system 200 on the basis of at least one motion related parameter.

The control signal CS determined by the wind turbine control system 200 may be supplied as input signals 803 to a pitch control system 801 arranged for controlling the pitch of the blades 103. However, the control signal CS could also be supplied to other systems of the wind turbine 100, e.g. damping systems. A feed-back signal 802 may be obtained from a measurement of a wind turbine component, e.g. a blade 103. For example, the feed-back signal may be a measurement of a blade deflection of a blade 103. Accordingly, the wind turbine control system 200 may be arranged to determine the control signal CS dependent on the feed-back signal 802 in addition to the input signals 803 so as to control the wind turbine to achieve a desired value of the feed-back signal 802. The desired value of the feed-back signal 802 may be achieved by configuring the wind turbine control system 200 as a feed-back controller arranged to compare the feed-back signal 802 with a reference 804.

The feed-back signal 802 may be determined or estimated based on the motion related parameters of the at least one blade. The reference 804 may represent a desired value of the feed-back signal 802, e.g. an average or maximum blade load, a desired average or minimum tower clearance 301 or other suitable reference. Alternatively, the wind turbine control system 200 may be configured to determine the control signal CS without dependence on a feedback signal 802, i.e. the control system 200 may be configured as a feed-forward controller.

The motion related parameter, e.g. in the form of a predicted future parameter, a predicted future threshold, a predicted further risk or other, may change over time. For example, a required tower clearance or a predicted future blade stress, for a given present or future condition of wind and sea, could change over time. The change over time could be due to changes of the structural properties of the blades such as a reduction of stiffness over time, or changes of properties of the buoyancy structure. For example, growth of sea vegetation on the buoyancy structure could change the hydrodynamic properties of the structure.

Therefore, the motion related parameter may additionally be determined dependent on one or more historical values in order to include the time dependency of the motion related parameter on the determination of the control signal CS. The historical values are in general values which relate to the motion related parameter of the at least one blade. For example, the historical values may be determined as average values, peak values or a combination thereof. The historical values may further be determined dependent on the condition of the sea and wind in order to obtain sea and wind operational values for different particular or average conditions of the sea and wind.

Examples of other conditions affecting the motion related parameter of at least one blade in a floating offshore wind turbine may include tower motion such as tower rotations, rotor plane deviations from an optimal rotor plane and power production requirements. For example, if the rotor plane deviates from the desired rotor plane by a given angle due to the motional degrees of freedom of the floating offshore wind turbine, the blades may be loaded asymmetrically.

Accordingly, the rotor plane deviation or other conditions of the floating offshore wind turbine may be used in addition to condition of sea and wind, for determining the motion related parameter and the control signal CS.

For example, the motion related parameter in the form of a load value, e.g. a predicted future blade load may additionally be determined dependent on a rotor plane deviation, blade oscillations or other motion related parameter of the floating offshore wind turbine, in order to predict future blade loads more accurately.

As another example, the tower clearance may be determined dependent on e.g. tower rotations, in order to predict future clearances or tower clearance thresholds more accurately.

Additionally, the wind turbine control system 200 may be configured to determine a lifetime value of a component of the wind turbine, e.g. the blades 103. For example, the lifetime value could be determined based on one or more of the history of the motion related parameters and the condition of wind and sea. For example, the history of determined motion related parameters e.g. in the form of predicted blade loads could be used for determining an accumulated prediction of loads on the blades which can be used as a basis for determining a lifetime value such as a remaining lifetime of the blades. The determination of accumulated conditions of the sea, e.g. an accumulation of determined wave heights could be used as a basis for determining the lifetime value. For example, the lifetime value could be determined based on a weighted sum of wave heights or other conditions of the sea.

In summary the invention relates to a method is for reducing a load of a wind turbine component of a sea-operated floating offshore wind turbine supported by a floating buoyancy structure. The invention discloses a wind turbine control system for determining a control signal CS for controlling the wind and sea conditioned effects on the floating offshore wind turbine. The control signal CS is determined based on a motion related parameter which is depending on conditions of the wind and sea.

### List

- 100.: Floating offshore wind turbine
- 101.: Wind turbine tower
- 102.: Wind turbine rotor
- 103.: Wind turbine blade, rotor blade
- 104.: Wind turbine nacelle
- 105.: Blade tip
- 106.: Blade root
- 107.: Pitch mechanism for a wind turbine blade
- 111.: Floating buoyancy structure for a wind turbine
- 112.: Mooring lines connecting the floating buoyancy structure with the seabed foundations or anchors
- 113.: Seabed foundations or anchors
- 121.: Surface of the sea
- 122.: Seabed
- 200.: Wind turbine control system
- 201.: Wind condition generator
- 202.: Sea condition generator
- 203.: Other condition generator
- 204.: Motion related parameter generator (MRP)
- 205.: Control signal generator (CS)
- 206.: Wind condition from one or more blade motion detectors
- 207.: Sea condition from one or more blade motion detectors
- 208.: Other condition from one or more detectors
- 300.: Upwind floating offshore wind turbine
- 301.: Clearance between the tower and wind turbine blades
- 303.: Wind direction causing wind turbine blades to bend towards the tower
- 400.: Downwind floating offshore wind turbine
- 401.: Forward/backward direction perpendicular to rotor plane of a floating offshore wind turbine
- 402.: Sideways direction in the rotor plane
- 403.: Wind direction causing wind turbine blades to bend away from the tower
- 500.: Curve or functional relationship
- 501, 502.: Other curves or functional relationships
- 505.: Input
- 506.: Motion related parameter
- 601.: Predicted motion related parameter
- 602.: Measured motion related parameter
- 603.: Control signal
- 611.: Peaks before change of control signal
- 612.: Peaks after change of control signal
- 613.: Threshold
- 711.: Dips in tower clearance
- 712.: Future tower clearance dips
- 713.: Tower clearance threshold
- 800.: Load control system for a floating offshore wind turbine
- 801.: Pitch control system for a floating offshore wind turbine
- 802.: Feed-back signal
- 803.: Input signals
- 804.: Reference
- CS.: Control signal
- MRP.: Motion related parameter
- t.: Time
- t1, t2.: Specific time

## Claims

1. A method of controlling a floating offshore wind turbine operated at sea, the floating offshore wind turbine comprising a tower, a rotor with at least one blade and a floating buoyancy structure arranged for supporting the tower, the method comprising the steps of:
- obtaining at least one motion related parameter (MRP) of the at least one blade, said motion related parameter (MRP) depending on conditions of sea and wind,
- determining at least one control signal (CS) on the basis of said at least one motion related parameter (MRP), and
- controlling the floating offshore wind turbine dependent on the at least one control signal (CS),
wherein the at least one motion related parameter (MRP) is obtained as a dynamic state or change of the at least one blade.

2. A method according to claim 1, where said conditions of sea and wind for obtaining said at least one motion related parameter (MRP) are measured in or on the at least one blade as strain values and/or stress values.

3. A method according to claim 1 or 2, where said conditions of sea and wind for obtaining said at least one motion related parameter (MRP) are measured using one or more blade motion detectors.

4. A method according to any of the preceding claims, where said dynamic state or change of the at least one blade is obtained as deflection values of the at least one blade e.g. by measurement, estimation and/or prediction of a distance between the at least one blade and the tower.

5. A method according to claim 4, where said blade deflection is measured as position data, velocity data, and/or acceleration data of one or more locations of the at least one blade e.g. the location of a tip end of the at least one blade.

6. A method according to any of the preceding claims, where said dynamic state or change of the at least one blade is obtained as oscillation values of the at least one blade e.g. by measurement, estimation and/or prediction of oscillation amplitudes.

7. A method according to any of the preceding claims, where said dynamic state or change of the at least one blade is obtained as fore-aft rotations of the at least one blade e.g. by measurement, estimation and/or prediction of one or more locations of the at least one blade, such as the location of a root end of the at least one blade.

8. A method according to any of the preceding claims, where the control signal (CS) is determined by comparing said at least one motion related parameter (MRP) with a tower clearance threshold, a load threshold of the at least one blade and/or a protective value of the floating offshore wind turbine.

9. A method according to any of the preceding claims, where the conditions of sea and wind are detected by:
- transmitting a signal between a tip communication device located towards a tip end of the at least one blade and a root communication device located towards a root end of the at least one blade,
- calculating a distance between the tip communication device and the root communication device based on the transmitted signal,
- estimating a deflection value of the at least one blade based on the calculated distance.

10. A method according to any of the preceding claims, where the at least one control signal (CS) is determined dependent on one or more historical values relating to the motion related parameter (MRP) of the at least one blade.

11. A method according to any of the preceding claims, where a blade load reduction action is performed on the floating offshore wind turbine in response to the at least one control signal (CS) by pitch controlling of said at least one blade.

12. A wind turbine control system (200) for controlling a floating offshore wind turbine (100) arranged to be operated at sea, the floating offshore wind turbine comprises a tower (101), a rotor (102) with at least one blade (103) and a floating buoyancy structure (111) arranged for supporting the tower, where the control system is arranged to
- obtain at least one motion related parameter (MRP) of the at least one blade where the motion related parameter (MRP) is obtained as a dynamic state or change of the at least one blade, said motion related parameter (MRP) depends on condition of sea and wind, and
- determine at least one control signal (CS) for controlling the floating offshore wind turbine (100), where the at least one control signal is determined dependent on said at least one motion related parameter (MRP) of the at least one blade.

13. A wind turbine control system (200) according to claim 12, where the wind turbine control system (200) is connected to:
- blade motion detectors (206-208) arranged to measure said conditions of sea and wind e.g. the blade motion detectors (206-208) are accelerometers arranged to measure motion of portions of the at least one blade (103),
- optical fiber sensors arranged along the at least one blade (103) arranged to measure changes in strain at different locations of the at least one blade,
- strain sensors located at different locations of the at least one blade (103) arranged to measure changes in strain, and/or
- radio-frequency based antenna systems comprising root and tip communication devices arranged to detect deflection values of the at least one blade (103).

14. A wind turbine control system (200) for controlling a floating offshore wind turbine (100) according to claim 12 or 13, where the wind turbine control system (200) is arranged to determine the at least one control signal (CS) according to any of claims 1 to 11 for a pitch control system (801) coupled to said at least one blade (103).

15. A floating offshore wind turbine (100) comprising a tower (101), a rotor (102) with at least one blade (103), where the floating offshore wind turbine is arranged to be supported by a floating buoyancy structure (111), where the floating offshore wind turbine further comprises a wind turbine control system (200) according to claim 13 or 14 and where said wind turbine control system (200) is arranged to determine a control signal (CS) for a pitch control system (801) coupled to said at least one blade (103).
